# FASCICULE DE BREVET EUROPEEN

(11) **EP 2 845 525 B1**
(45) Date de publication et mention de la délivrance du brevet: **24.08.2016**
(21) Numéro de dépôt: 14183335.0
(22) Date de dépôt: 03.09.2014
(51) Int. Cl.: A47J 43/046, A47J 43/07, B26D 1/43, A47J 19/02

(54) **Dispositif de préparation d'aliments pour extraire des jus et/ou des coulis**
Vorrichtung zur Zubereitung von Lebensmitteln, insbesondere zum Entsaften und/oder Pürieren
Food preparation device for extracting juice and/or coulis

(30) Priorité: 09.09.2013 FR 1358660
(43) Date de publication de la demande: 11.03.2015
(73) Titulaire: SEB S.A., 69130 Ecully (FR)
(72) Inventeur: Lafond, Jean-Marie, 65420 IBOS (FR); Peyras, Lionel, 65100 LOURDES (FR)
(74) Mandataire: Cémeli, Eric Philippe Laurent

(56) Documents cités:
- EP-A1- 2 159 014
- EP-A1- 2 522 259
- WO-A1-2012/173333

## Description

La présente invention concerne le domaine technique des dispositifs de préparation d'aliments comportant un outil de découpe rotatif.

La présente invention concerne plus particulièrement, mais non exclusivement, les appareils électroménagers de préparation culinaire comportant un boîtier motorisé portant un accessoire amovible formant un dispositif de préparation d'aliments du type précité. La présente invention concerne également les accessoires amovibles du type précité.

Les documents EP2159014 et EP2159015 divulguent un dispositif de préparation d'aliments comportant plusieurs outils de découpe rotatifs. Ces outils permettent de découper en tranches, d'émincer, de pulvériser ou de râper différents aliments. Toutefois ces outils sont plus particulièrement adaptés au travail d'aliments relativement durs, susceptibles d'être découpés de manière relativement franche, ainsi qu'au travail d'aliments friables tels que certains fromages. Avec des aliments plus mous et/ou hétérogènes, tels que par exemple les tomates, les fruits rouges, les courgettes cuites, du jus et/ou du coulis peut être obtenu mais avec un rendement peu élevé.

Un objet de la présente invention est de proposer un dispositif de préparation d'aliments comportant un outil de découpe rotatif, qui permette d'obtenir des jus et/ou des coulis avec un rendement d'extraction satisfaisant.

Un autre objet de la présente invention est de proposer un dispositif de préparation d'aliments comportant un outil de découpe rotatif, qui permette d'obtenir des jus et/ou des coulis tout en offrant une utilisation simple.

Un autre objet de la présente invention est de proposer un dispositif de préparation d'aliments comportant un outil de découpe rotatif, qui permette d'obtenir des jus et/ou des coulis tout en offrant un nettoyage aisé.

Un autre objet de la présente invention est de proposer un dispositif de préparation d'aliments comportant un outil de découpe rotatif, qui permette d'obtenir des jus et/ou des coulis tout en offrant un rangement compact.

Ces objets sont atteints avec un dispositif de préparation d'aliments comprenant :
- un outil de découpe rotatif comportant une extrémité d'entraînement et une paroi latérale issue de l'extrémité d'entraînement, la paroi latérale présentant au moins un organe de découpe externe adjacent à un passage traversant, la paroi latérale ménageant une ouverture frontale pour l'évacuation des morceaux d'aliments découpés,
- un boîtier définissant un logement présentant une ouverture de montage pour la mise en place de l'outil de découpe dans le logement, le boîtier présentant une cheminée pour introduire les aliments à découper, la cheminée débouchant dans le logement au moins partiellement en regard du ou de l'un au moins des organes de découpe externes,
du fait :
- que le boîtier porte un conduit prolongeant le logement,
- et que l'outil de découpe entraîne en rotation un organe de pressage comportant au moins une pale pressant les morceaux d'aliments découpés contre au moins une portion de paroi filtrante ménagée dans le conduit, pour obtenir des jus et/ou des coulis.

Ces dispositions permettent de réaliser un dispositif de préparation d'aliments qui peut aussi être utilisé pour obtenir des jus et/ou des coulis avec de bons rendements d'extraction, tout en conservant une construction simple, une utilisation facile et un nettoyage aisé.

Avantageusement, la paroi filtrante est agencée dans une enceinte de travail, et l'enceinte de travail présente une sortie d'écoulement agencée en aval de la paroi filtrante. Cette disposition permet de mieux contrôler l'écoulement des jus et/ou des coulis obtenus.

Avantageusement encore, la paroi filtrante s'étend de manière circonférentielle autour de l'organe de pressage. Cette disposition permet d'améliorer la vitesse d'extraction sans augmenter l'encombrement du dispositif de préparation d'aliments.

Avantageusement alors, la paroi filtrante appartient à un organe de filtration monté en appui circonférentiel dans le logement. Cette disposition permet de confiner les morceaux d'aliments découpés entre le boîtier et l'organe de filtration.

Avantageusement alors, l'ouverture frontale de l'outil de découpe s'étend en regard de l'organe de filtration. Cette disposition permet de confiner les morceaux d'aliments découpés entre l'outil de découpe et l'organe de filtration.

Avantageusement encore, l'organe de pressage est monté à l'intérieur de l'outil de découpe contre au moins une butée d'entraînement en rotation. Cette disposition contribue à simplifier l'entraînement en rotation de l'organe de pressage.

Avantageusement alors, l'organe de pressage comporte une série de languettes engagées à l'intérieur de l'outil de découpe contre des butées d'entraînement en rotation. Cette disposition permet à la fois de centrer et d'entraîner en rotation l'organe de pressage.

Avantageusement encore, l'organe de pressage s'étend de manière circonférentielle dans le prolongement de l'outil de découpe. Cette disposition permet de simplifier le guidage en rotation de l'organe de pressage.

Avantageusement encore, l'organe de pressage comporte une série de pales conformées pour presser les morceaux d'aliments découpés contre la paroi filtrante de l'organe de filtration lors de la rotation de l'organe de pressage. Cette disposition contribue également à améliorer la vitesse d'extraction et le rendement d'extraction sans augmenter l'encombrement du dispositif de préparation d'aliments.

Avantageusement encore, le dispositif de préparation d'aliments comporte un organe de raclage s'étendant à l'intérieur de l'outil de découpe. Cette disposition contribue à améliorer le rendement et la vitesse d'extraction en évitant l'accumulation des morceaux d'aliments découpés à l'intérieur de l'outil de découpe et en facilitant le convoyage des morceaux d'aliments découpés vers l'organe de pressage.

Avantageusement alors, l'organe de raclage présente une arête de raclage agencée au dessus de la face interne de la paroi latérale de l'outil de découpe. Cette disposition permet de commencer à presser les morceaux d'aliments encore présents à l'intérieur de l'outil de découpe. Cette disposition contribue également au convoyage des morceaux d'aliments vers l'organe de pressage.

Avantageusement encore, l'organe de raclage est porté par un organe de filtration comportant la paroi filtrante. Cette disposition permet de simplifier la construction du dispositif de préparation d'aliments. Selon une forme de réalisation préférée, l'organe de raclage est issu de l'organe de filtration.

Avantageusement encore, le dispositif de préparation d'aliments comporte un poussoir pouvant être déplacé dans la cheminée pour pousser les aliments vers l'outil de découpe. Cette disposition contribue également à augmenter le rendement et la vitesse d'extraction.

Selon une forme de réalisation avantageuse permettant de réaliser un accessoire amovible susceptible d'être monté sur un boîtier motorisé, le boîtier porte un organe de transmission monté libre en rotation, et l'extrémité d'entraînement de l'outil de découpe monté dans le logement vient en prise avec l'organe de transmission pour entraîner en rotation l'outil de découpe. En alternative l'organe de transmission peut notamment être remplacé par un arbre d'entraînement issu d'une motorisation portée par le boîtier.

Ces objets sont atteints également avec un appareil électroménager de préparation d'aliments comprenant une base motorisée et un accessoire de travail solidaire de la base motorisée, l'accessoire de travail comportant :
- un outil de découpe rotatif comportant une extrémité d'entraînement et une paroi latérale issue de l'extrémité d'entraînement, la paroi latérale présentant au moins un organe de découpe externe adjacent à un passage traversant, la paroi latérale ménageant une ouverture frontale pour l'évacuation des morceaux d'aliments découpés,
- un boîtier définissant un logement présentant une ouverture de montage pour la mise en place de l'outil de découpe dans le logement, le boîtier présentant une cheminée pour introduire les aliments à découper, la cheminée débouchant dans le logement au moins partiellement en regard du ou de l'un au moins des organes de découpe externes,
du fait que l'accessoire de travail forme un dispositif de préparation d'aliments selon l'une au moins des caractéristiques précitées.

L'invention sera mieux comprise à l'étude de trois exemples de réalisation et de variantes, pris à titre nullement limitatif, illustrés dans les figures annexées, dans lesquelles :
- les figures 1 et 2 sont respectivement une vue en perspective et en éclaté et une vue en coupe assemblée d'un exemple de réalisation d'un appareil électroménager de préparation d'aliments selon l'art antérieur, comportant une base motorisée et un accessoire de travail amovible,
- les figures 3 et 4 sont respectivement une vue en coupe assemblée et une vue en perspective et en éclaté d'un premier exemple de réalisation d'un accessoire de travail amovible formant un dispositif de préparation d'aliments selon l'invention,
- la figure 5 est une vue en perspective d'un boîtier de l'accessoire de travail illustré sur les figures 3 et 4,
- la figure 6 est une vue en perspective d'un outil de découpe de l'accessoire de travail illustré sur les figures 3 et 4,
- la figure 7 est une vue en perspective d'un organe de pressage de l'accessoire de travail illustré sur les figures 3 et 4,
- la figure 8 est une vue en perspective d'un organe de filtration de l'accessoire de travail illustré sur les figures 3 et 4,
- la figure 9 est une vue en perspective d'un déflecteur de l'accessoire de travail illustré sur les figures 3 et 4,
- la figure 10 est une vue en perspective selon une autre orientation de l'organe de pressage illustré sur la figure 7,
- les figures 11 à 15 sont des vues en perspective de cinq variantes de réalisation de l'organe de pressage illustré sur les figures 7 et 10,
- la figure 16 est une vue en perspective selon une autre orientation de organe de filtration illustré sur la figure 8,
- les figures 17 et 18 sont des vues en perspective de deux variantes de réalisation de l'organe de filtration illustré sur les figures 8 et 16,
- les figures 19 et 20 sont respectivement une vue en perspective assemblée et une vue en perspective éclatée d'un deuxième exemple de réalisation d'un accessoire de travail amovible formant un dispositif de préparation d'aliments selon l'invention,
- la figure 21 est une vue en coupe longitudinale d'un troisième exemple de réalisation d'un accessoire de travail amovible formant un dispositif de préparation d'aliments selon l'invention.

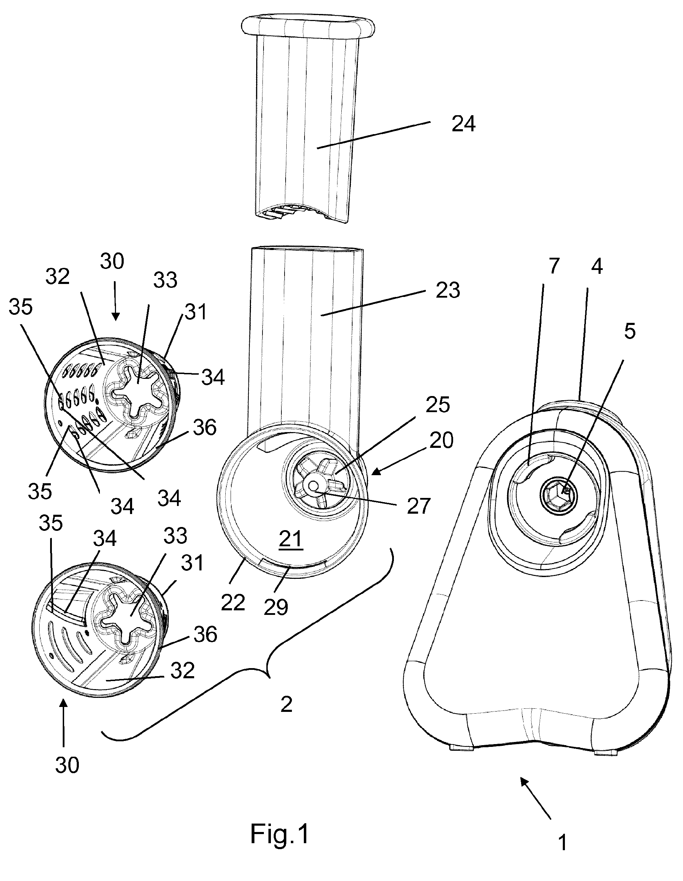

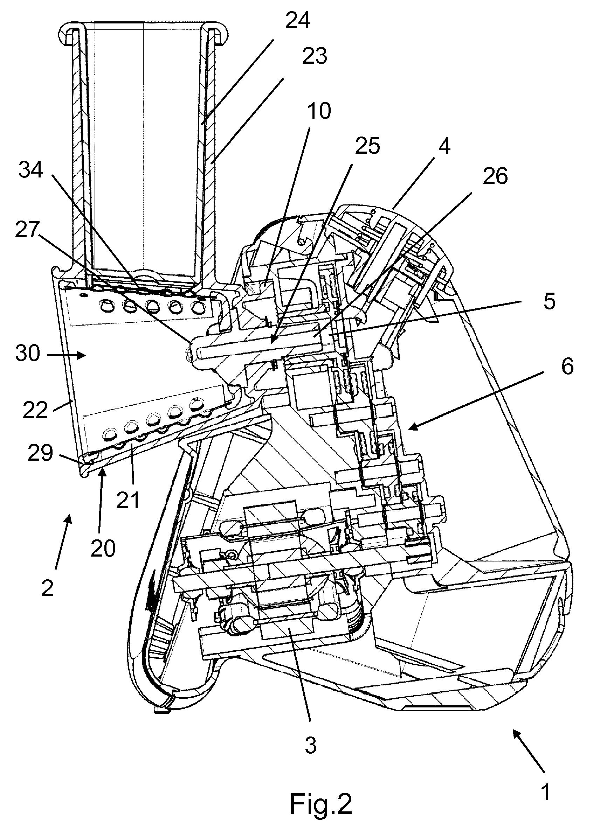

L'appareil électroménager de préparation d'aliments selon l'art antérieur illustré sur les figures 1 et 2 comprend une base motorisée 1 et un accessoire de travail 2 amovible.

La base motorisée 1 loge un moteur électrique 3 piloté par un dispositif de commande 4. Le moteur électrique 3 est relié à une sortie d'entraînement 5 si désiré par l'intermédiaire d'un dispositif de transmission 6. Le dispositif de transmission 6 peut comporter un réducteur.

L'accessoire de travail 2 forme un dispositif de préparation d'aliments comportant un boîtier 20, un poussoir 24 et deux outils de découpe 30 rotatifs interchangeables pour râper ou pour émincer les aliments.

Le boîtier 20 définit un logement 21 présentant une ouverture de montage 22 pour la mise en place de l'un ou l'autre des outils de découpe 30 dans le logement 21. Le boîtier 20 présente aussi une cheminée 23 pour introduire les aliments à découper. La cheminée 23 communique avec le logement 21. Le poussoir 24 peut être déplacé dans la cheminée 23 pour pousser les aliments vers l'outil de découpe 30 monté dans le logement 21.

Plus particulièrement dans l'exemple de réalisation illustré aux figures 1 et 2, le boîtier 20 porte un organe de transmission 25 monté libre en rotation. L'organe de transmission 25 est entraîné par la sortie d'entraînement 5 et vient en prise avec l'outil de découpe 30 agencé dans le logement 21. L'organe de transmission 25 comporte une première extrémité 26 venant en prise avec la sortie d'entraînement 5. La première extrémité 26 est par exemple formée par un arbre de section hexagonale ou carrée. L'organe de transmission 25 comporte une deuxième extrémité 27 agencée dans le logement 21, prévue pour entraîner en rotation l'outil de découpe 30. La deuxième extrémité 27 comporte des crochets 28 pour retenir l'outil de découpe 30.

Tel que visible sur la figure 2, le logement 21 est déversant en direction de l'ouverture de montage 22. Le boîtier 20 présente une butée inférieure 29 pour retenir l'outil de découpe 30 agencé dans le logement 21. La butée inférieure 29 est formée à proximité de l'ouverture de montage 22.

L'accessoire de travail 2 peut être monté sur la base motorisée 1, tel que représenté sur la figure 2. L'accessoire de travail 2 est alors solidaire de la base motorisée 1. L'accessoire de travail 2 comporte à cet effet des moyens de fixation 10 prévus pour venir en prise avec des moyens de fixation complémentaires 7 de la base motorisée 1. Dans l'exemple de réalisation illustré sur les figures 1 et 2, les moyens de fixation 10 et les moyens de fixation complémentaires 7 sont des moyens de fixation à baïonnette. A titre de variante, d'autres moyens de fixation peuvent être utilisés, notamment une bague de verrouillage assemblée par vissage ou par baïonnette, ou encore des crochets de retenue.

L'outil de découpe 30 agencé dans le logement 21 du boîtier 20 monté sur la base motorisée 1 est entraîné en rotation. L'outil de découpe 30 rotatif comporte une extrémité d'entraînement 31 et une paroi latérale 32 issue de l'extrémité d'entraînement 31. L'extrémité d'entraînement 31 de l'outil de découpe 30 monté dans le logement 21 vient en prise avec l'organe de transmission 25 pour entraîner en rotation l'outil de découpe 30. A cet effet l'extrémité d'entraînement 31 comporte un moyen d'accouplement et d'entraînement en rotation 33 venant en prise avec la deuxième extrémité 27 de l'organe de transmission 25.

La paroi latérale 32 présente au moins un organe de découpe externe 34 adjacent à un passage traversant 35, pour découper les aliments et recueillir les morceaux d'aliments découpés à l'intérieur de la paroi latérale 32. Si désiré la paroi latérale 32 peut comporter plusieurs organes de découpe externes 34, chaque organe de découpe externe 34 étant adjacent à un passage traversant 35, tel que visible sur l'un des outils de découpe 30 illustré sur la figure 1. La paroi latérale 32 ménage une ouverture frontale 36 pour l'évacuation des morceaux d'aliments découpés. L'ouverture frontale 36 est agencée à l'opposé de l'extrémité d'entraînement 31. Tel que visible sur la figure 2, la partie inférieure de la paroi latérale 32 de l'outil de découpe 30 monté dans le logement 21 est inclinée vers le bas en direction de l'ouverture frontale 36. Dans l'exemple de réalisation illustré aux figures 1 et 2, la paroi latérale 32 présente une configuration tronconique. A titre de variante, d'autres configurations ménageant une ouverture frontale 36 pour l'évacuation des morceaux d'aliments découpés peuvent être envisagées, notamment une configuration cylindrique.

Tel que visible sur la figure 2, la cheminée 23 débouche dans le logement 21 au moins partiellement en regard du ou de l'un au moins des organes de découpe externes 34.

Le dispositif de préparation d'aliments illustré sur les figures 1 et 2 permet d'obtenir des aliments émincés ou râpés. Les aliments introduits dans la cheminée 23 sont découpés par l'outil de découpe 30 monté dans le logement 21 et entraîné en rotation par l'organe de transmission 25.

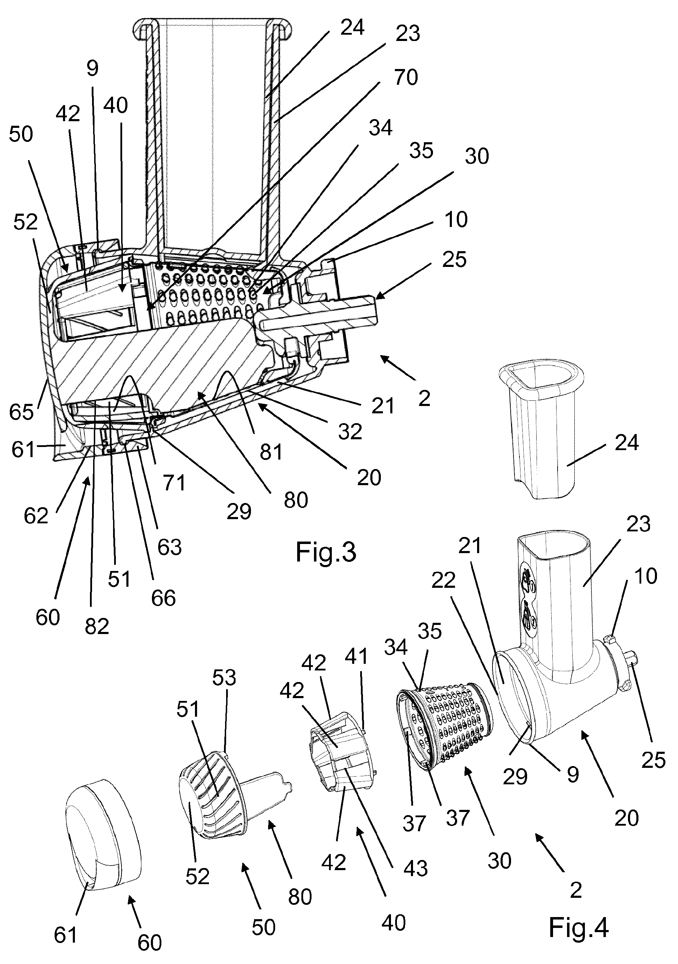

Les figures 3 à 9 illustrent un premier exemple de réalisation d'un accessoire de travail 2 formant un dispositif de préparation d'aliments selon l'invention.

Pour simplifier la description, les éléments communs avec l'exemple de réalisation précédent conservent les mêmes dénominations et les mêmes numéros de références.

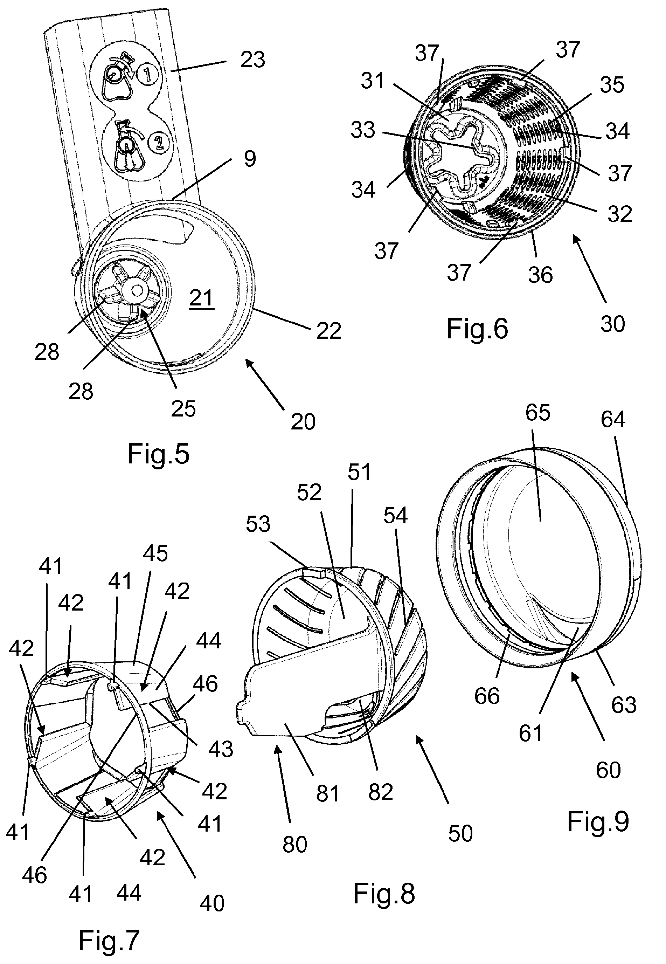

Cet exemple de réalisation diffère de l'exemple de réalisation précédent en ce que l'accessoire de travail 2 comporte également un organe de pressage 40, mieux visible sur les figures 4, 7 et 10, un organe de filtration 50 comportant une paroi filtrante 51, mieux visible sur les figures 4, 8 et 16, et un déflecteur 60 présentant une sortie d'écoulement 61 pour l'écoulement d'aliments liquides et/ou pulpeux, mieux visible sur les figures 4 et 9.

Tel que visible sur les figures 3 à 5, le boîtier 20 présente une protubérance externe 9 à proximité de l'ouverture de montage 22. Dans la forme de réalisation préférée illustrée sur les figures, la protubérance externe 9 est formée par une collerette annulaire. Par ailleurs, la butée inférieure 29 est formée à distance de l'ouverture de montage 22. Le logement 21 s'étend au-delà de la butée inférieure 29 en direction de l'ouverture de montage 22.

L'outil de découpe 30 comporte au moins une butée d'entraînement en rotation 37 prévue pour entraîner l'organe de pressage 40. Selon le premier exemple de réalisation, l'organe de pressage 40 est monté à l'intérieur de l'outil de découpe 30 contre au moins une butée d'entraînement en rotation 37. De préférence, l'outil de découpe 30 présente plusieurs butées d'entraînement en rotation 37 réparties circonférentiellement. Cette disposition permet également d'obtenir un centrage de l'organe de pressage 40 qui peut être porté par l'outil de découpe 30. Tel que mieux visible sur les figures 4 et 6, dans le premier exemple de réalisation les butées d'entraînement en rotation 37 sont agencées à l'intérieur de la paroi latérale 32. Les butées d'entraînement en rotation 37 sont agencées entre les passages traversants 35 et l'ouverture frontale 36. A titre de variante, la ou les butées d'entraînement en rotation 37 ne sont pas nécessairement agencées à l'intérieur de la paroi latérale 32. La ou les butées d'entraînement en rotation 37 peuvent notamment être agencées sur la bordure formant l'ouverture frontale 36.

L'organe de pressage 40 est entraîné en rotation par l'outil de découpe 30. Plus particulièrement dans cet exemple de réalisation, l'organe de pressage 40 est porté par l'outil de découpe 30. L'organe de pressage 40 s'étend de manière circonférentielle dans le prolongement de l'outil de découpe 30. L'organe de pressage 40 comporte une série de languettes 41 externes engagées à l'intérieur de l'outil de découpe 30 contre les butées d'entraînement en rotation 37.

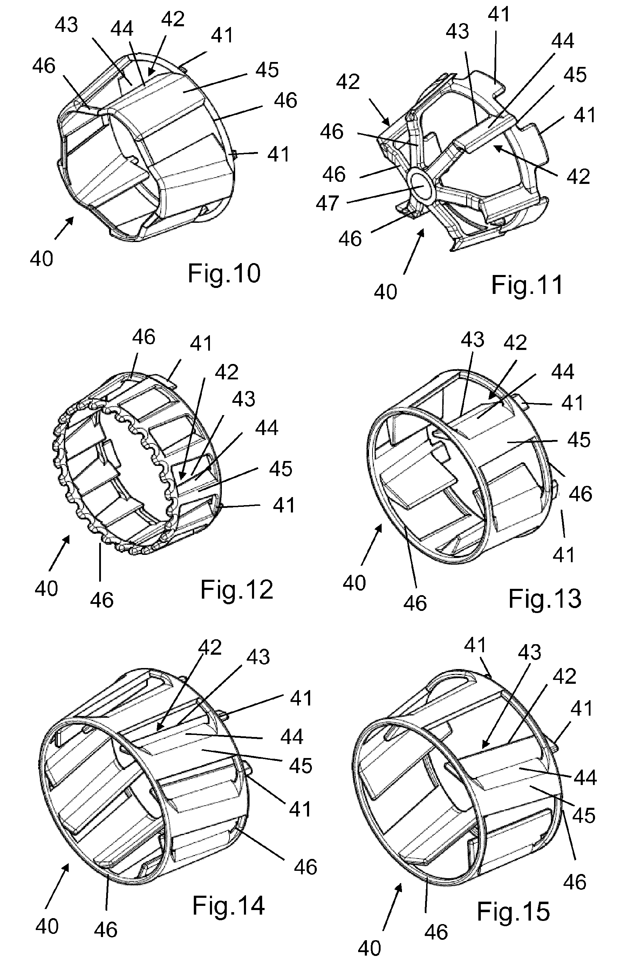

L'organe de pressage 40 comporte une série de pales 42 agencées circonférentiellement. Tel que mieux visible sur les figures 7 et 10, chaque pale 42 comporte un bord d'attaque 43 s'étendant longitudinalement par rapport à l'axe de rotation de l'organe de pressage 40. Chaque bord d'attaque 43 est prolongé par une paroi de pressage 44. Avantageusement, chaque paroi de pressage 44 est prolongée par une portion circonférentielle 45. Les pales 42 adjacentes sont reliées entre elles par des montants 46. Dans l'exemple de réalisation illustré sur les figures 7 et 10, deux séries de montants 46 sont agencées en bordure des pales 42. Les pales 42 sont ainsi reliées entre elles par deux anneaux. L'organe de pressage 40 forme ainsi une roue montée dans l'ouverture frontale 36 de l'outil de découpe 30. La roue prolonge l'outil de découpe 30 et comporte les pales 42 tournant à l'intérieur de l'organe de filtration 50.

A titre de variante, les montants 46 ne relient pas nécessairement deux pales 42 adjacentes. Dans la variante de réalisation illustrée sur la figure 11, l'une des séries de montants 46 est disposée radialement. Ces montants 46 se rejoignent au niveau d'un moyeu 47. Si désiré, le moyeu 47 peut être utilisé pour centrer et/ou guider en rotation l'organe de pressage 40.

Les languettes 41 et/ou les montants 46 portant les languettes 41 sont avantageusement déformables élastiquement pour faciliter le montage de l'organe de pressage 40 sur l'outil de découpe 30. A titre de variante, l'organe de pressage 40 pourrait notamment être assemblé par baïonnette avec l'outil de découpe 30. Tel que visible sur les figures 7 et 10, ainsi que sur la figure 13, les languettes 41 sont agencées au niveau des portions circonférentielles 45. A titre de variante les languettes 41 peuvent être formées au moins partiellement sur au moins certains des montants 46, notamment tel que représenté sur les figures 11 et 12. A titre de variante, les languettes 41 peuvent être issues d'une portion latérale des pales 42, notamment tel que représenté sur les figures 14 et 15.

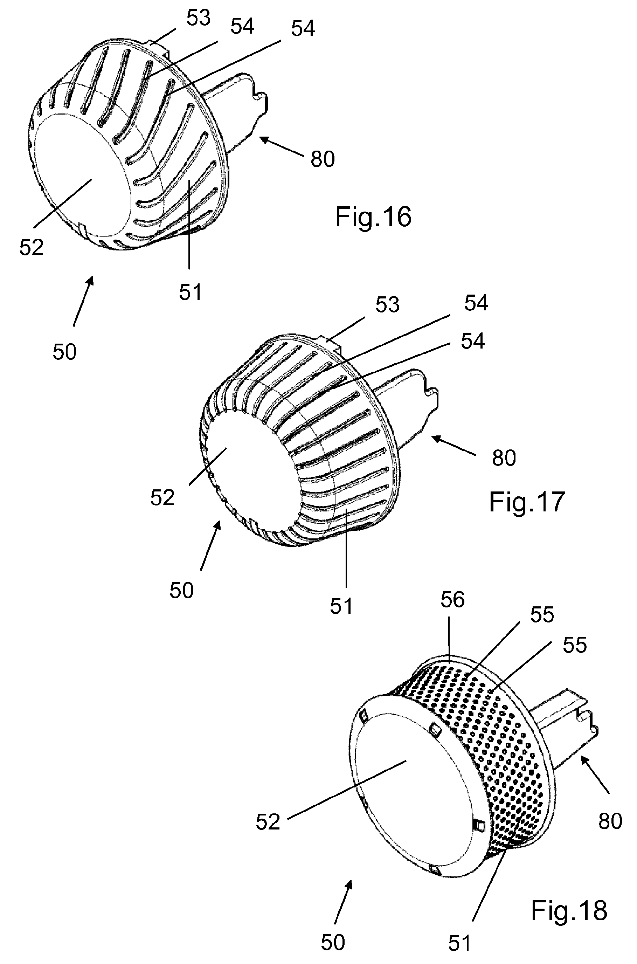

L'organe de filtration 50 comporte la paroi filtrante 51. Tel que visible sur les figures 4, 8 et 16, la paroi filtrante 51 s'étend de manière circonférentielle à partir d'une paroi de fond 52. Si désiré, l'organe de filtration 50 peut comporter au moins une butée en rotation 53 retenue par le boîtier 20. La paroi filtrante 51 est perforée et/ou ajourée de manière à laisser passer le jus et si désiré au moins une partie de la pulpe, tout en retenant les morceaux d'aliments découpés non encore pressés, ainsi que les résidus de pressage. Tel que représenté sur les figures 4, 8 et 16, la paroi filtrante 51 comporte une série de fentes 54 présentant un angle par rapport au bord d'attaque 43 des pales 42. A titre de variante, les fentes 54 ne sont pas nécessairement réparties sur régulièrement et/ou sur l'ensemble de la circonférence de l'organe de filtration 50. D'autres configurations peuvent être envisagées, notamment une série de fentes 54 s'étendant longitudinalement, tel que représenté sur la figure 17, ou encore une série de perforations 55, tel que représenté sur la figure 18. Les perforations 55 peuvent notamment être formées dans un tambour 56 assemblé avec la paroi de fond 52.

Le déflecteur 60 présente la sortie d'écoulement 61 pour l'écoulement d'aliments liquides et/ou pulpeux. Le déflecteur 60 comporte une bordure 63 déformable élastiquement pour venir en prise sur le boîtier 20 autour de l'ouverture de montage 22. Selon la forme de réalisation préférée illustrée sur les figures, la bordure 63 est annulaire. Ainsi l'ouverture de montage 22 est fermée par le déflecteur 60. Dans cet exemple de réalisation, le déflecteur 60 comprend un anneau élastomère 64 monté sur le boîtier 20 autour de l'ouverture de montage 22. L'anneau élastomère 64 est fermé par une coque 65 comportant la sortie d'écoulement 61. La coque 65 peut notamment être réalisée dans une matière plastique rigide.

Par ailleurs, le déflecteur 60 comporte une gorge interne 66 circonférentielle logeant au moins une protubérance externe 9 du boîtier 20. La gorge interne 66 est de préférence réalisée dans l'anneau élastomère 64. Si désiré, le déflecteur 60 peut être pivoté en rotation autour de l'ouverture de montage 22 du boîtier 20 pour modifier la position de la sortie d'écoulement 61 et interrompre l'écoulement du jus. A titre de variante, le déflecteur 60 ne comporte pas nécessairement une bordure déformable élastiquement. Le déflecteur 60 pourrait notamment être verrouillé par baïonnette sur le boîtier 20.

Selon un mode de réalisation préféré, l'accessoire de travail 2 comporte aussi un organe de raclage 80. Tel que mieux visible sur la figure 3, l'organe de raclage 80 s'étend à l'intérieur de l'outil de découpe 30. De manière préférée, l'organe de raclage 80 présente une arête de raclage 81 agencée au dessus de la face interne de la paroi latérale 32 de l'outil de découpe 30. L'organe de raclage 80 présente une échancrure 82 entre l'arête de raclage 81 et l'organe de filtration 50, pour permettre l'évolution des pales 42 de l'organe de pressage 40. Dans la forme de réalisation préférée illustrée sur les figures, l'organe de raclage 80 est porté par l'organe de filtration 50. Plus particulièrement, l'organe de raclage 80 est issu de la paroi de fond 52. L'organe de raclage 80 et l'organe de filtration 50 peuvent ainsi être réalisés en une seule pièce. En alternative, l'organe de raclage 80 peut par exemple être rapporté sur l'organe de filtration 50. A titre de variante, l'organe de raclage 80 pourrait notamment être porté par le déflecteur 60.

Tel que visible sur la figure 3, la partie inférieure du logement 21 du boîtier 20 présente une pente déversante en direction de la partie inférieure de la paroi filtrante 51. L'ouverture frontale 36 de l'outil de découpe 30 s'étend en regard de l'organe de filtration 50. L'organe de filtration 50 est agencé entre l'organe de pressage 40 et la sortie d'écoulement 61. La paroi filtrante 51 prolonge le logement 21. Plus particulièrement, l'organe de filtration 50 est porté par le boîtier 20. L'organe de filtration 50 est monté en appui circonférentiel dans le logement 21. L'organe de filtration 50 permet ainsi de retenir les morceaux d'aliments découpés à l'intérieur de l'accessoire de travail. Si désiré, l'organe de filtration 50 peut venir en appui contre la butée inférieure 29 ménagée dans le logement 21. La paroi filtrante 51 s'étend de manière circonférentielle autour de l'organe de pressage 40. Ainsi au moins la partie inférieure de l'organe de filtration 50 forme un conduit 71 prolongeant le logement 21. Le déflecteur 60 est monté sur le boîtier 20. La paroi filtrante 51 est coiffée par le déflecteur 60. Ainsi la paroi filtrante 51 est agencée dans une enceinte de travail 70 délimitée par le boîtier 20 et le déflecteur 60. Le déflecteur 60 présente une pente déversante 62 sous l'organe de filtration 50 en direction de la sortie d'écoulement 61. L'enceinte de travail 70 présente ainsi la sortie d'écoulement 61 agencée en aval de la paroi filtrante 51, pour l'écoulement des jus et/ou des coulis. A titre de variante, le déflecteur 60 pourrait notamment être monté sur l'organe de filtration 50, la paroi filtrante 51 étant alors agencée dans l'enceinte de travail 70 délimitée par le boîtier 20, le déflecteur 60 et une portion non filtrante de l'organe de filtration 50 reliant le boîtier 20 au déflecteur 60.

Selon l'invention, le boîtier 20 porte le conduit 71 prolongeant le logement 21, et l'outil de découpe 30 entraîne en rotation l'organe de pressage 40 comportant au moins une pale 42 pour presser les morceaux d'aliments découpés contre au moins une portion de paroi filtrante 51 ménagée dans le conduit 71, pour obtenir des jus et/ou des coulis.

Dans l'exemple de réalisation illustré sur les figures 3 à 9, le conduit 71 est formé par l'organe de filtration 50. Du fait que l'organe de filtration 50 est monté en appui circonférentiel dans le logement 21, le conduit 71 comprend l'ensemble de la paroi filtrante 51 ainsi que la paroi de fond 52.

Le conduit 71 est ainsi un conduit fermé présentant seulement les fentes 54 pour l'écoulement du jus et si désiré d'au moins une partie de la pulpe.

Le dispositif de préparation d'aliments selon l'invention illustré sur les figures 3 à 9 fonctionne et s'utilise de la manière suivante.

L'utilisateur monte le boîtier 20 sur la base motorisée 1, met en place l'outil de découpe 30 dans le logement 21 du boîtier 20, monte l'organe de pressage 40 sur l'outil de découpe 30, insère l'organe de filtration 50 dans le déflecteur 60, et monte le déflecteur 60 sur le boîtier 20. L'utilisateur peut alors mettre en marche l'appareil et introduire les aliments dans la cheminée 23 après avoir placé un récipient sous la sortie d'écoulement 61. Les aliments sont d'abord découpés par les organes de découpe externes 34. Une partie du jus peut s'écouler dans le logement 21 à l'extérieur de l'outil de découpe 30, toutefois la majeure partie des morceaux d'aliments découpés est recueillie à l'intérieur de la paroi latérale 32 de l'outil de découpe 30 et tombe par gravité dans la partie inférieure. L'organe de raclage 80 permet d'éviter que les morceaux d'aliments découpés tapissent l'intérieur de la paroi latérale 32 et contribue à convoyer les morceaux d'aliments découpés vers l'organe de pressage 40. L'organe de raclage 80 contribue aussi à l'extraction de jus. Les pales 42 de l'organe de pressage 40 sont conformées pour presser les morceaux d'aliments découpés contre la paroi filtrante 51 lors de la rotation de l'organe de pressage 40. Le bord d'attaque 43 des pales 42 s'étendant à distance de la face interne de la paroi filtrante 51 permet de collecter des morceaux d'aliments en vue de leur pressage. Les parois de pressage 44 prolongeant les bords d'attaque 43 et se rapprochant de la face interne de la paroi filtrante 51 permettent de compléter l'extraction de jus. Le jus peut s'écouler à l'extérieur de l'enceinte de travail 70 par la sortie d'écoulement 61. Le jeu réduit entre la bordure de l'outil de découpe 30 entourant l'ouverture frontale 36 et le logement 21 permet de confiner les déchets tels que les pépins et peaux de tomates principalement à l'extérieur de l'outil de découpe 30. Selon la taille des ouvertures de la paroi filtrante 51, du jus et/ou du coulis plus ou moins pulpeux peut être obtenu.

Si désiré, plusieurs organes de filtration 50 interchangeables peuvent être prévus. En alternative, l'organe de filtration 50 peut comporter au moins une paroi filtrante 51 présentant des parties filtrantes interchangeables, et/ou plusieurs portions de paroi filtrante 51 pouvant être obturées sélectivement et/ou être positionnées sélectivement en regard de la sortie d'écoulement 61.

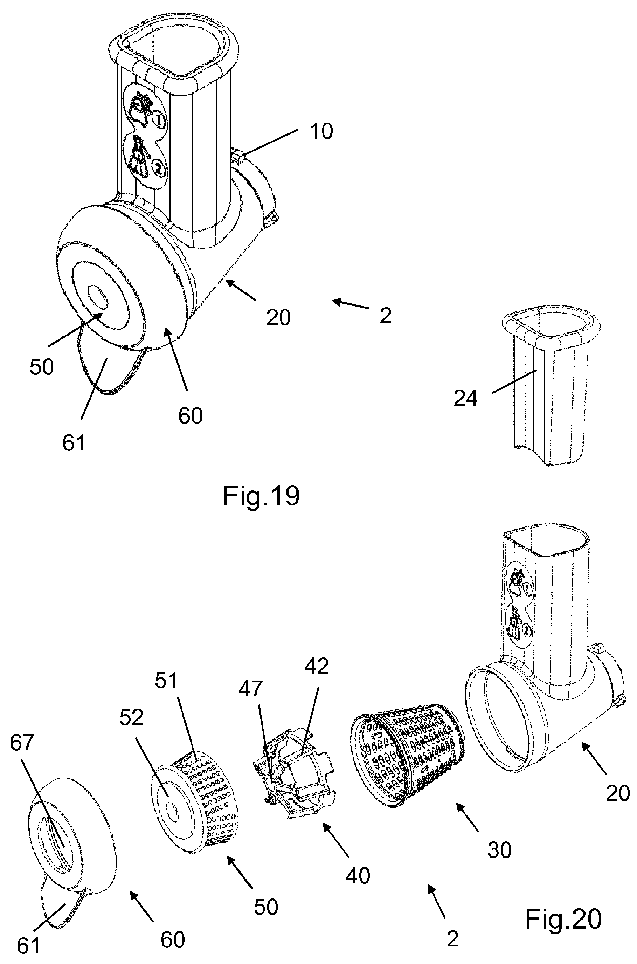

L'exemple de réalisation illustré sur les figures 19 et 20 diffère de l'exemple de réalisation illustré sur les figures 3 à 9 principalement en ce que le dispositif de préparation d'aliments est dépourvu d'organe de raclage et en ce que l'organe de filtration 50 est porté par le déflecteur 60.

A cet effet le déflecteur 60 présente une ouverture 67 obturée par une portion de la paroi de fond 52 de l'organe de filtration 50. L'ouverture 67 est agencée en position centrale et présente une forme circulaire, de sorte que le déflecteur 60 peut occuper plusieurs positions sur le boitier 20 pour autoriser ou arrêter l'écoulement du jus. Le déflecteur 60 est réalisé en matériau souple, par exemple en élastomère, alors que l'organe de filtration 50 peut être réalisé en matériau plus rigide. Par ailleurs, l'organe de pressage 40 est conforme à la variante illustrée sur la figure 11 et comporte un moyeu 47 guidé en rotation dans l'organe de filtration 50, par exemple par une protubérance axiale interne issue de la paroi de fond 52.

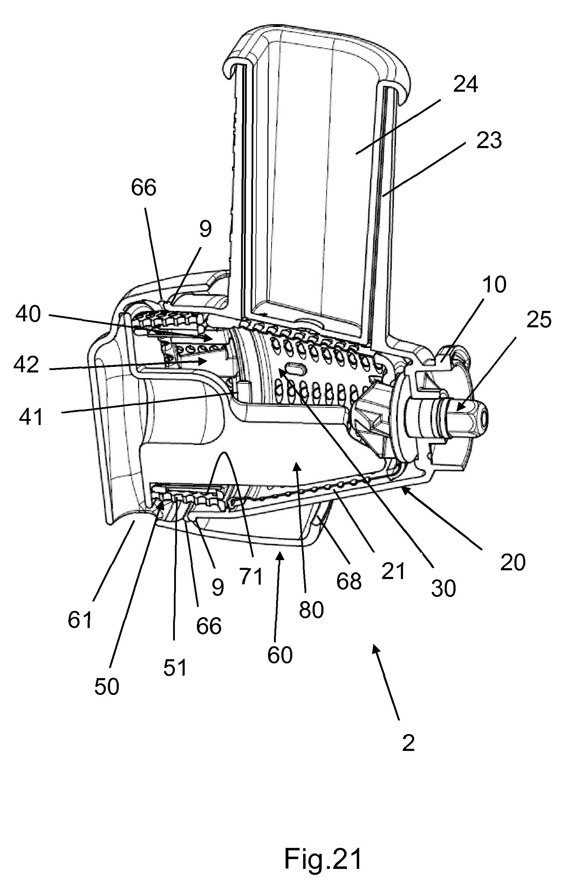

L'exemple de réalisation illustré sur la figure 21 diffère de l'exemple de réalisation illustré sur les figures 3 à 9 principalement en ce que le déflecteur 60 est réalisé en une seule pièce, par exemple en matière plastique rigide, élastiquement déformable.

Le déflecteur 60 comporte deux gorges internes 66 opposées prévues pour recevoir des protubérances externes 9 du boîtier 20. Le déflecteur 60 présente une languette 68 agencée dans le prolongement de l'une des gorges internes 66 à l'opposé de la sortie d'écoulement 61, pour faciliter le retrait du déflecteur 60 par pivotement, après désengagement de la protubérance externe 9 inférieure obtenu en appuyant de manière bilatérale sur la paroi du déflecteur 60 entre les gorges internes 66.

Dans les exemples de réalisation illustrés sur les figures, le déflecteur 60 est monté sur le boîtier 20. Le déflecteur 60 est ainsi porté directement par le boîtier 20. A titre de variante, le déflecteur 60 pourrait être porté indirectement par le boîtier 20. Notamment, l'organe de filtration 50 pourrait être monté sur le boîtier 20, le déflecteur 60 étant monté sur l'organe de filtration 50.

Dans les exemples de réalisation illustrés sur les figures, l'organe de filtration 50 est monté dans le logement 21 du boîtier 20. L'organe de filtration 50 est ainsi porté directement par le boîtier 20. A titre de variante, l'organe de filtration 50 pourrait notamment être porté par le déflecteur 60. Le conduit 71 comprend alors la ou les parties du déflecteur 60 agencée(s) entre le boîtier 20 et l'organe de filtration 50.

A titre de variante, la paroi filtrante 51 ménagée dans le conduit 71 ne s'étend pas nécessairement de manière circonférentielle. Le conduit 71 peut comprendre une ou plusieurs portions de paroi filtrante 51.

A titre de variante, le conduit 71 n'est pas nécessairement un conduit fermé. Si désiré, le conduit 71 peut présenter notamment une ouverture supérieure, ménagée par exemple dans la partie supérieure de l'organe de filtration 50. Une ouverture complémentaire peut alors être prévue dans le déflecteur 60.

A titre de variante, le logement 21 ne contient pas nécessairement l'ensemble de l'outil de découpe 30. Notamment la bordure entourant l'ouverture frontale 36 de l'outil de découpe 30 peut dépasser du logement 21.

A titre de variante, l'organe de pressage 40 peut être entraîné en rotation par l'outil de découpe 30 sans nécessairement être porté par l'outil de découpe 30. L'organe de pressage 40 peut notamment être guidé en rotation par l'organe de filtration 50 et/ou par le déflecteur 60.

A titre de variante, l'organe de pressage 40 peut comporter au moins une pale 42 conformée pour presser les morceaux d'aliments découpés contre la paroi filtrante 51 lors de la rotation de l'organe de pressage 40. L'organe de pressage comporte avantageusement entre 2 et 12 pales 42, et de préférence entre 3 et 8 pales 42.

A titre de variante, l'organe de filtration 50 peut comporter au moins une portion de paroi filtrante 51 agencée en regard de la ou des pales 42 de l'organe de pressage 40.

A titre de variante, le déflecteur 60 pourrait être issu de l'organe de filtration 50.

A titre de variante, l'accessoire de travail 2 n'est pas nécessairement amovible de la base motorisée 1.

La présente invention n'est nullement limitée aux exemples de réalisation décrits, mais englobe de nombreuses modifications dans le cadre des revendications.

## Revendications

1. Dispositif de préparation d'aliments comprenant :
- un outil de découpe (30) rotatif comportant une extrémité d'entraînement (31) et une paroi latérale (32) issue de l'extrémité d'entraînement (31), la paroi latérale (32) présentant au moins un organe de découpe externe (34) adjacent à un passage traversant (35), la paroi latérale (32) ménageant une ouverture frontale (36) pour l'évacuation des morceaux d'aliments découpés,
- un boîtier (20) définissant un logement (21) présentant une ouverture de montage (22) pour la mise en place de l'outil de découpe (30) dans le logement (21), le boîtier (20) présentant une cheminée (23) pour introduire les aliments à découper, la cheminée (23) débouchant dans le logement (21) au moins partiellement en regard du ou de l'un au moins des organes de découpe externes (34),
**caractérisé**
- **en ce que** le boîtier (20) porte un conduit (71) prolongeant le logement (21),
- et **en ce que** l'outil de découpe (30) entraîne en rotation un organe de pressage (40) comportant au moins une pale (42) pour presser les morceaux d'aliments découpés contre au moins une portion de paroi filtrante (51) ménagée dans le conduit (71), pour obtenir des jus et/ou des coulis.

2. Dispositif de préparation d'aliments selon la revendication 1, **caractérisé en ce que** la paroi filtrante (51) est agencée dans une enceinte de travail (70) et **en ce que** l'enceinte de travail (70) présente une sortie d'écoulement (61) agencée en aval de la paroi filtrante (51).

3. Dispositif de préparation d'aliments selon l'une des revendications 1 ou 2, **caractérisé en ce que** la paroi filtrante (51) s'étend de manière circonférentielle autour de l'organe de pressage (40).

4. Dispositif de préparation d'aliments selon la revendication 3, **caractérisé en ce que** la paroi filtrante (51) appartient à un organe de filtration (50) monté en appui circonférentiel dans le logement (21).

5. Dispositif de préparation d'aliments selon la revendication 4, **caractérisé en ce que** l'ouverture frontale (36) de l'outil de découpe (30) s'étend en regard de l'organe de filtration (50).

6. Dispositif de préparation d'aliments selon l'une des revendications 1 à 5, **caractérisé en ce que** l'organe de pressage (40) est monté à l'intérieur de l'outil de découpe (30) contre au moins une butée d'entraînement en rotation (37).

7. Dispositif de préparation d'aliments selon la revendication 6, **caractérisé en ce que** l'organe de pressage (40) comporte une série de languettes (41) engagées à l'intérieur de l'outil de découpe (30) contre des butées d'entraînement en rotation (37).

8. Dispositif de préparation d'aliments selon l'une des revendications 1 à 7, **caractérisé en ce que** l'organe de pressage (40) s'étend de manière circonférentielle dans le prolongement de l'outil de découpe (30).

9. Dispositif de préparation d'aliments selon l'une des revendications 1 à 8, **caractérisé en ce que** l'organe de pressage (40) comporte une série de pales (42) conformées pour presser les morceaux d'aliments découpés contre la paroi filtrante (51) lors de la rotation de l'organe de pressage (40).

10. Dispositif de préparation d'aliments selon l'une des revendications 1 à 9, **caractérisé en ce qu'**il comporte un organe de raclage (80) s'étendant à l'intérieur de l'outil de découpe (30).

11. Dispositif de préparation d'aliments selon la revendication 10, **caractérisé en ce que** l'organe de raclage (80) présente une arête de raclage (81) agencée au dessus de la face interne de la paroi latérale (32) de l'outil de découpe (30).

12. Dispositif de préparation d'aliments selon l'une des revendications 10 ou 11, **caractérisé en ce que** l'organe de raclage (80) est porté par un organe de filtration (50) comportant la paroi filtrante (51).

13. Dispositif de préparation d'aliments selon l'une des revendications 1 à 12, **caractérisé en ce qu'**il comporte un poussoir (24) pouvant être déplacé dans la cheminée (23) pour pousser les aliments vers l'outil de découpe (30).

14. Dispositif de préparation d'aliments selon l'une des revendications 1 à 13, **caractérisé en ce que** le boîtier (20) porte un organe de transmission (25) monté libre en rotation et **en ce que** l'extrémité d'entraînement (31) de l'outil de découpe (30) monté dans le logement (21) vient en prise avec l'organe de transmission (25) pour entraîner en rotation l'outil de découpe (30).

15. Appareil électroménager de préparation d'aliments comprenant une base motorisée (1) et un accessoire de travail (2) solidaire de la base motorisée (1), l'accessoire de travail (2) comportant :
- un outil de découpe (30) rotatif comportant une extrémité d'entraînement (31) et une paroi latérale (32) issue de l'extrémité d'entraînement (31), la paroi latérale (32) présentant au moins un organe de découpe externe (34) adjacent à un passage traversant (35), la paroi latérale (32) ménageant une ouverture frontale (36) pour l'évacuation des morceaux d'aliments découpés,
- un boîtier (20) définissant un logement (21) présentant une ouverture de montage (22) pour la mise en place de l'outil de découpe (30) dans le logement (21), le boîtier (20) présentant une cheminée (23) pour introduire les aliments à découper, la cheminée (23) débouchant dans le logement (21) au moins partiellement en regard du ou de l'un au moins des organes de découpe externes (34),
**caractérisé en ce que** l'accessoire de travail (2) forme un dispositif de préparation d'aliments selon l'une des revendications 1 à 14.

## Patentansprüche

1. Vorrichtung zur Zubereitung von Lebensmitteln, die Folgendes umfasst:
- ein drehendes Zerkleinerungswerkzeug (30) mit einem Antriebsende (31) und einer Seitenwand (32), die aus dem Antriebsende (31) hervorgeht, wobei die Seitenwand (32) mindestens ein außenliegendes Zerkleinerungselement (34) aufweist, das an einen Durchlass (35) angrenzt, wobei die Seitenwand (32) eine vordere Öffnung (36) für die Ausgabe der zerkleinerten Lebensmittelstücke bildet,
- ein Gehäuse (20), das eine Aufnahme (21) mit einer Montageöffnung (22) zum Einsetzen des Zerkleinerungswerkzeugs (30) in die Aufnahme (21) definiert, wobei das Gehäuse (20) einen Schacht (23) zum Einfüllen der zu zerkleinernden Lebensmittel aufweist und der Schacht (23) in der Aufnahme (21) zumindest teilweise gegenüber dem oder zumindest einem der außen liegenden Zerkleinerungselemente (34) mündet, **dadurch gekennzeichnet,**
- **dass** das Gehäuse (20) einen Kanal (71) trägt, der die Aufnahme (21) verlängert,
- und **dass** das Zerkleinerungswerkzeug (30) ein Presselement (40) in Drehung versetzt, das mindestens ein Blatt (42) zum Pressen der zerkleinerten Lebensmittelstücke gegen zumindest einen Abschnitt der Filterwand (51) umfasst, die in dem Kanal (71) ausgebildet ist, um Saft und/oder Püree zu erhalten.

2. Vorrichtung zur Zubereitung von Lebensmitteln nach Anspruch 1, **dadurch gekennzeichnet, dass** die Filterwand (51) in einem Arbeitsraum (70) angeordnet ist und dass der Arbeitsraum (70) einen Auslauf (61) aufweist, der der Filterwand (51) nachgeordnet ist.

3. Vorrichtung zur Zubereitung von Lebensmitteln nach einem der Ansprüche 1 oder 2, **dadurch gekennzeichnet, dass** die Filterwand (51) umlaufend um das Presselement (40) verläuft.

4. Vorrichtung zur Zubereitung von Lebensmitteln nach Anspruch 3, **dadurch gekennzeichnet, dass** die Filterwand (51) zu einem Filterelement (50) gehört, das sich am Umfang abstützend in der Aufnahme (21) montiert ist.

5. Vorrichtung zur Zubereitung von Lebensmitteln nach Anspruch 4, **dadurch gekennzeichnet, dass** die vordere Öffnung (36) des Zerkleinerungswerkzeugs (30) gegenüber dem Filterelement (50) liegt.

6. Vorrichtung zur Zubereitung von Lebensmitteln nach einem der Ansprüche 1 bis 5, **dadurch gekennzeichnet, dass** das Presselement (40) im Innern des Zerkleinerungswerkzeugs (30) gegen zumindest einen Drehantriebsanschlag (37) montiert wird.

7. Vorrichtung zur Zubereitung von Lebensmitteln nach Anspruch 6, **dadurch gekennzeichnet, dass** das Presselement (40) eine Reihe von Laschen (41) umfasst, die im Innern des Zerkleinerungswerkzeugs (30) mit Drehantriebsanschlägen (37) im Eingriff sind.

8. Vorrichtung zur Zubereitung von Lebensmitteln nach einem der Ansprüche 1 bis 7, **dadurch gekennzeichnet, dass** sich das Presselement (40) umlaufend in der Verlängerung des Zerkleinerungswerkzeugs (30) erstreckt.

9. Vorrichtung zur Zubereitung von Lebensmitteln nach einem der Ansprüche 1 bis 8, **dadurch gekennzeichnet, dass** das Presselement (40) eine Reihe ausgebildeter Blätter (42) umfasst, die die zerkleinerten Lebensmittelstücke bei sich drehendem Presselement (40) gegen die Filterwand (51) pressen.

10. Vorrichtung zur Zubereitung von Lebensmitteln nach einem der Ansprüche 1 bis 9, **dadurch gekennzeichnet, dass** sie ein Abstreifelement (80) umfasst, das sich im Innern des Zerkleinerungswerkzeugs (30) erstreckt.

11. Vorrichtung zur Zubereitung von Lebensmitteln nach Anspruch 10, **dadurch gekennzeichnet, dass** das Abstreifelement (80) eine Abstreifkante (81) aufweist, die über der Innenseite der Seitenwand (32) des Zerkleinerungswerkzeugs (30) angeordnet ist.

12. Vorrichtung zur Zubereitung von Lebensmitteln nach einem der Ansprüche 10 oder 11, **dadurch gekennzeichnet, dass** das Abstreifelement (80) von einem Filterelement (50) getragen wird, das die Filterwand (51) umfasst.

13. Vorrichtung zur Zubereitung von Lebensmitteln nach einem der Ansprüche 1 bis 12, **dadurch gekennzeichnet, dass** sie einen Stopfer (24) umfasst, der in dem Schacht (23) bewegt werden kann, um die Lebensmittel in Richtung des Zerkleinerungswerkzeugs (30) zu schieben.

14. Vorrichtung zur Zubereitung von Lebensmitteln nach einem der Ansprüche 1 bis 13, **dadurch gekennzeichnet, dass** das Gehäuse (20) ein Getriebeelement (25) trägt, das drehbar montiert ist, und dass das Antriebsende (31) des in der Aufnahme (21) montierten Zerkleinerungswerkzeugs (30) mit dem Getriebeelement (25) in Eingriff kommt, um das Zerkleinerungswerkzeug (30) drehend anzutreiben.

15. Elektrohaushaltsgerät zur Zubereitung von Lebensmitteln mit einem motorisierten Sockel (1) und einem Arbeitszubehör (2), das mit dem motorisierten Sockel (1) fest verbunden ist, wobei das Arbeitszubehör (2) Folgendes umfasst:
- ein drehendes Zerkleinerungswerkzeug (30) mit einem Antriebsende (31) und einer Seitenwand (32), die aus dem Antriebsende (31) hervorgeht, wobei die Seitenwand (32) mindestens ein außenliegendes Zerkleinerungselement (34) aufweist, das an einen Durchlass (35) angrenzt, wobei die Seitenwand (32) eine vordere Öffnung (36) für die Ausgabe der zerkleinerten Lebensmittelstücke bildet,
- ein Gehäuse (20), das eine Aufnahme (21) mit einer Montageöffnung (22) zum Einsetzen des Zerkleinerungswerkzeugs (30) in die Aufnahme (21) definiert, wobei das Gehäuse (20) einen Schacht (23) zum Einfüllen der zu zerkleinernden Lebensmittel aufweist und der Schacht (23) in der Aufnahme (21) zumindest teilweise gegenüber dem oder zumindest einem der außen liegenden Zerkleinerungselemente (34) mündet, **dadurch gekennzeichnet, dass** das Arbeitszubehör (2) eine Vorrichtung zur Zubereitung von Lebensmitteln nach einem der Ansprüche 1 bis 14 bildet.

## Claims

1. Device for preparing foodstuffs:
- a rotary cutting tool (30) having a drive end (31) and a side wall (32) coming from the drive end (31), the side wall (32) having at least one external cutting member (34) adjacent to a through passage (35), the side wall (32) forming a front opening (36) for evacuating pieces of cut foodstuffs,
- a casing (20) defining a housing (21) having a mounting opening (22) for fitting the cutting tool (30) in the housing (21), the casing (20) having a hollow shaft (23) for introducing the foodstuffs to be cut, the hollow shaft (23) opening into the housing (21) at least partially opposite to the or at least one of the external cutting members (34), **characterised**
- **in that** the casing (20) carries a duct (71) extending the housing (21),
- and **in that** the cutting tool (30) rotates a pressing member (40) having at least one blade (42) to press the cut pieces of foodstuffs against at least a portion of filtering wall (51) formed in the duct (71), to obtain juices and/or coulis.

2. Device for preparing foodstuffs according to claim 1, **characterised in that** the filtering wall (51) is arranged in a working chamber (70) and **in that** the working chamber (70) has a flow outlet (61) arranged downstream from the filtering wall (51).

3. Device for preparing foodstuffs according to claim 1 or 2, **characterised in that** the filtering wall (51) extends circumferentially around the pressing member (40).

4. Device for preparing foodstuffs according to claim 3, **characterised in that** the filtering wall (51) belongs to a filtering member (50) mounted to rest circumferentially in the housing (21).

5. Device for preparing foodstuffs according to claim 4, **characterised in that** the front opening (36) of the cutting tool (30) extends opposite the filtering member (50).

6. Device for preparing foodstuffs according to one of claims 1 to 5, **characterised in that** the pressing member (40) is mounted inside the cutting tool (30) against at least one rotational drive stop (37).

7. Device for preparing foodstuffs according to claim 6, **characterised in that** the pressing member (40) includes a series of tabs (41) engaged inside the cutting tool (30) against rotational drive stops (37).

8. Device for preparing foodstuffs according to one of claims 1 to 7, **characterised in that** the pressing member (40) extends circumferentially in the extension of the cutting tool (30).

9. Device for preparing foodstuffs according to one of claims 1 to 8, **characterised in that** the pressing member (40) includes a series of blades (42) shaped to press the cut pieces of foodstuffs against the filtering wall (51) during the rotation of the pressing member (40).

10. Device for preparing foodstuffs according to one of claims 1 to 9, **characterised in that** it comprises a scraping member (80) extends inside the cutting tool (30).

11. Device for preparing foodstuffs according to claim 10, **characterised in that** the scraping member (80) has a scraping edge (81) arranged above the inner side of the side wall (32) of the cutting tool (30).

12. Device for preparing foodstuffs according to claim 10 or 11, **characterised in that** the scraping member (80) is carried by a filtering member (50) including the filtering wall (51).

13. Device for preparing foodstuffs according to one of claims 1 to 12, **characterised in that** it comprises a pusher (24) that can be displaced in the hollow shaft (23) to push the foodstuffs towards the cutting tool (30).

14. Device for preparing foodstuffs according to one of claims 1 to 13, **characterised in that** the casing (20) carries a transmission member (25) mounted so as to rotate freely and **in that** the drive end (31) of the cutting tool (30) mounted in the housing (21) engages with the transmission member (25) to rotate the cutting tool (30).

15. Household electric appliance for the preparation of foodstuffs comprising a motorised base (1) and a work accessory (2) attached to the motorised base (1), the work accessory (2) including:
- a rotary cutting tool (30) having a drive end (31) and a side wall (32) coming from the drive end (31), the side wall (32) having at least one external cutting member (34) adjacent to a through passage (35), the side wall (32) forming a front opening (36) for evacuating pieces of cut foodstuffs,
- a casing (20) defining a housing (21) having a mounting opening (22) for fitting the cutting tool (30) in the housing (21), the casing (20) having a hollow shaft (23) for introducing the foodstuffs to be cut, the hollow shaft (23) opening into the housing (21) at least partially opposite to the or at least one of the external cutting members (34), **characterised in that** the work accessory (2) forms a device for preparing foodstuffs according to one of claims 1 to 14.
